# EUROPEAN PATENT SPECIFICATION

(11) **EP 2 356 909 B1**
(45) Date of publication and mention of the grant of the patent: **01.07.2015**
(21) Application number: 10388010.0
(22) Date of filing: 27.07.2010
(51) Int. Cl.: A23G 1/18, A23G 1/00

(54) **Kit assembly for the modification of a tempering column**
Kitanordnung zur Modifizierung einer Temperierkolonne
Ensemble pour la modification d'une colonne de conditionnement

(30) Priority: 01.04.2010 EP 10075150
(43) Date of publication of application: 17.08.2011
(60) Divisional application: 13005763.1
(73) Proprietor: Aasted ApS, 3520 Farum (DK)
(72) Inventor: Holmud, Dennis, 2860 Soborg (DK)
(74) Representative: Heiden, Finn

(56) References cited:
- EP-A1- 0 872 187
- EP-A1- 0 893 066
- EP-A1- 0 947 140
- EP-A1- 1 425 975
- EP-A1- 1 566 104
- EP-A1- 1 616 487
- EP-A2- 1 050 214
- EP-A2- 1 249 174
- WO-A1-01/06863
- WO-A1-92/00015
- DE-A1- 2 602 877
- DE-A1- 10 329 177
- FR-A- 1 163 921

## Description

The present invention concerns a kit assembly of parts adapted for modifying an apparatus for continuous tempering of chocolate mass comprising a cooling stage (A), a crystallisation stage (B) and a mixing stage (C) arranged as a tempering column of stacked elements each having a water chamber and a chocolate compartment, as well as comprising pump means adapted for pumping the chocolate mass through the column from the bottom towards the top of the column or vice versa thereby providing a flow direction for the chocolate.

The tempering apparatus has disc-shaped chocolate chambers interconnected via chocolate channels and intermediary disc-shaped water chambers as well as a central shaft connected with stirring tools arranged in the chocolate chambers. However, the apparatus could have several different inner configurations as long as it is able to perform continuous tempering of fat-containing, crystallisable chocolate mass. The chocolate channels could for example be arranged at the periphery of the chocolate chambers or could be arranged as ring-shaped openings through which the shaft extends. When the openings are ring-shaped the stirring tools are typically sheave-formed. An external pump provides a pressure for the flow of chocolate through the chambers of the apparatus.

EP 1425975 A1 discloses a tempering apparatus where a conduit is branched off from the conditioning stage, so that it returns a stream of already crystallised chocolate to the crystallisation stage. In practice it became very difficult to exactly control the degree of crystallisation continuously performed in the crystallisation stage.

EP 1249174 A1 discloses an apparatus for tempering of chocolate mass comprising a first cooling stage, a second cooling stage and a reheating or mixing stage. In the first and the second cooling stages the chocolate is cooled to 31 to 35°C without crystallisation. The crystallisation takes place in the mixing stage as further mass is added, which has been enriched with chocolate crystals, such as in already crystallised "seed" powder. An example discloses, that mass is retracted from the tempering apparatus at the end of the cooling stage, is being mixed with the chocolate crystal powder and is added to the tempering apparatus at the beginning of the mixing stage. Another example discloses that mass from the supply tank is being mixed with the chocolate crystal powder and is added at the beginning of the mixing stage.

DE 103 29 177 A1 discloses an apparatus for tempering of chocolate mass having one or more internal by-pass channels extending through water chambers inside the apparatus. Separate streams of mass running through the by-pass channels are mixed with the main stream of mass for improving the general mixing characteristics of the mass being tempered. All streams of mass are subjected to the same temperature conditions dictated by the water chambers, being either cooled or heated. Consequently, all streams are either cooled and crystallized simultaneously or heated simultaneously.

Generally, the chocolate mass that may be continuously tempered by the apparatus according to the invention encompass all types of suspensions of non-fat particles such as sugar, milk powders and cocoa solids mixed up with a liquid fat constituent, so that the suspensions are capable of crystallizing. When it comes to the most widely used chocolate mass types, the fat constituent comprises genuine cocoa butter typically in a content of up to approximately 35%. However, the fat phase may also comprise substitutes as well. A small content of up to 2-3 % of genuine cocoa butter may still be left In the recipe. Substitutes may be in the form of other types of fat-containing oils such as palm-kernel oil. Chocolate types having the cocoa butter been replaced by other fats are often named commercially as compound chocolate, especially when the cocoa butter has been replaced completely by palm-kernel oil. Mass made of up to 100% cocoa butter may however also be continuously tempered. It is used later on as constituent in the production of different chocolate mass recipes.

However, for the continuous tempering to be performed, it is decisive, that whether the fat phase constitutes of genuine cocoa butter or substitutes, the fat phase must be capable of crystallizing into stable crystal types when the mass solidifies, such as the βV-crystals developing in genuine cocoa butter. Only then, eatable chocolate articles with good taste, crisp break and shiny appearance are created. The solidified chocolate articles will also achieve the longest possible shelf life and the best resistance against bloom, as instable crystals are diminished. If there is a content of in-stable crystals left in the mass, they will give rise to shorter shelf-life as the articles will bloom more quickly as when in-stable crystals are not present.

Optimal is then, when the type of crystals are stable βV-crystals only. The content thereof in the ready tempered chocolate mass shall be at a desired content- for example of 1,0 % for a specific production. Only then the manufacturer can rely on that the quality of his chocolate products are always the same.

Before the chocolate mass is supplied to perform the actual tempering process by running continuously through the tempering apparatus, the mass is heated to around 40-50°C in a premature step. Then essentially all the crystals in the chocolate mass are melted. The premature step is typically arranged distant to the tempering apparatus as the mass is heated in a storage tank. However, a heating step could also be arranged in the tempering apparatus in front of the cooling stage.

By the prior art tempering process the chocolate mass is being cooled to around 29-34°C in the cooling stage, so that crystals are very close to be created. Thereafter the mass passes through the crystallisation stage in which the temperature of the mass is typically lowered to 26-30°C. The mass and the heat-exchanging surfaces of the crystallisation stage is so cold, that crystals are created in the mass. The cooling water temperature is generally set to 10-14°C by the tempering apparatus at the market today. The approximate temperature of the heat-exchanging surfaces of the crystallisation stage is advised to be below 18°C, so that crystal creation ("impfning") is performed at the cooling surfaces and not in the mass. Thereafter, the mass is conditioned and the crystals are mixed out through the mass. By conditioning means that creation and development of new crystals in the mass proceed. The temperature is also raised 0,5-2,0°C in the conditioning and mixing stage. The purpose is to melt out as many as possible of the in-stable crystals, which unavoidably are created at the cold surfaces of the crystallisation stage. Desirable is to preserve a content of stable βV-crystals only, by trying to melt up the in-stable crystals, which melt at lower temperatures than the stable βV-crystals. The stable βV-crystals are preserved in the mass in an amount of typically 0,01% - 5%, preferably in an amount of 0,1% - 2%.

Apparatuses for performing the above continuous tempering methods have dominated the market for many years. Though the cold surfaces of the cooling and crystallisation stages have made the machines smaller in their physical size, they are however still large and expensive, especially when bigger amounts of mass shall be continuously tempered, i.e. more than 500kg/hour. The principle with the cold surfaces of the crystallisation stage also creates a huge amount of in-stable crystals, which very often makes it difficult to achieve the desirable, highest possible quality of the moulded product, especially in terms of shelf-life. This is because it is time consuming and energy consuming to remove in-stable crystals entirely during the final conditioning or reheating stage. The tempering columns of the apparatus would simply be to big and expensive if the conditioning stages should have sufficient capacity to achieve total re-melting of in-stable crystals. When mass with high fat content is tempered, then the amount of in-stable crystals created is also high. Then, the problem is even more exaggerated when chocolate with high fat content such as milk chocolate, white chocolate, nougat or filling mass for pralines are tempered.

A given size of a tempering machine at the market has a fixed length and consequently fixed areas for cooling, crystallisation and reheating.
Due to the above described problematic of continuous tempering of masses with a high fat content, it is well-known today, that the maximum capacity measured in kilograms per hour of tempered mass of a given tempering machine of the ones at the market is lowered severely when recipes with a high fat content are tempered. The maximum capacity is achieved when tempering dark chocolate having a fat content between 20-34%. In comparison herewith the capacity is typically lowered around 20% when milk chocolate, compound chocolate, nougat or other mass with a fat content between 30% and 40% is tempered.
When high fat recipes having fat content between 40% and 100% are tempered, the maximum capacity is lowered up to 50%.
A major disadvantage is then a very high energy consumption, firstly for cooling down the total mass and secondly for reheating the mass. Also the energy requirements are high for the chocolate pumps and the gear motors of the tempering machines.

When a manufacturer of chocolate articles is successful he needs to fulfil a market-demand very soon. That means, that he instantly has to increase his production of chocolate articles to the required level. However, the limits are set by the maximum production capacity of his equipment and especially of the tempering apparatus. So when the requirement is to produce more tempered chocolate than the maximum capacity of the tempering apparatus, he has to buy a further apparatus.

Then it would save the manufacturer time and money if the capacity of the existing tempering apparatus in his production could be raised.

The inventive kit assembly of parts comprises a device part having a first end and a second end, seen in the flow direction of the chocolate, and a primary conduit for chocolate mass extending between the two ends,
as well as a pump adapted to pump the chocolate through the conduit,
which kit further comprises a first and a second disc-shaped element adapted to substitute two disc-shaped elements of the tempering column, so that the first end is connected to the first disc-shaped element and the second end is connected to the second disc-shaped element, and so that the primary conduit is by-passing the stage (B) for creating crystals.

Hereby is provided a kit assembly, which is fast to mount on an existing tempering machine and is capable of raising the capacity of the machine severely.
The cost is low in comparison with a new tempering machine of higher capacity.

According to the present invention, the modified apparatus onto which the kit assembly is arranged comprises a primary conduit for chocolate mass, which is arranged by-passing the stage for creating crystals.

Then, an amount of mass is by-passed outside the exchanger without being crystallised, while the remaining stream of the mass is flowing through the crystallisation stage for creating crystals in the mass. Thereafter, the two streams of mass are brought together and mixed in the mixing stage.

The by-passed stream of mass is not cooled more than to the lowest possible temperature without creating crystals: It means, that the temperature of the by-passed stream of mass is approximately 4-5°C higher than by the traditional tempering process, i.e. by which the complete mass is cooled down for crystallisation. Thereby, the cooling amount for creating crystals in the by-passed mass is superfluous. Consequently, the total amount of cooling energy required for tempering the mass is much lower than by the prior tempering apparatuses.

Hereby is provided an apparatus, which is especially energy saving in comparison with the prior art. The total energy requirements for providing continuously tempered chocolate mass of high quality is lowered by at least 40% and up to 70% for the mostly applied chocolate types, such as dark chocolate, milk chocolate, nougat and white chocolate. The total energy consumption has been measured and compared with the total energy consumption for a prior art tempering apparatus tempering the same amount and type of mass.

The total capacity deliverable from the modified apparatus is also raised severely in comparison with the prior art. The capacity raise for a particular size of tempering column is up to two times for such common chocolate types as dark chocolate, milk chocolate, white chocolate and compound. The capacity could for example be increased from 1000 kg/hour and up to 3000 kg/hour. Hereby is also achieved the benefit, that when applying the method according to the invention, the physical size of a given tempering machine could be reduced with approximately 30% for delivering the same amount of tempered chocolate per hour. This is especially an advantage, when the tempering apparatus comprises a column and has a high capacity, such as over 1000 kg/hour. Then, the height of the tempering column is reduced up to approximately 30%, for example from 4,0 Meters in height and to under 3,0 Meters in height. For tempering machines having a capacity of tempered chocolate of more than 3000 kg/hour the advantage is especially great. These prior art tempering machines are so big that they are very difficult to handle, to transport and to install. Typically, the only practical solution is to transport the machines with the column in horizontal position and then raise it to vertical at the customers factory during installation. With the inventive solution this is not necessary any longer, instead the height and the gravity of weight of the machines are lowered so much that they can be handled in upright position. The weight of the machines are also reduced severely with the inventive solution as the weight is reduced up to 50%. As the demand from the market for tempering apparatus having capacity over 3000 kg/hour is increasing the inventive solution has a great value. Also it is now possible to manufacture, handle and install tempering columns having a capacity over 8-10.000 kg/hour as their size and especially height as well as weight are severely reduced.

A further advantage is, that instable crystals may potentially only be created in the smaller first stream of mass being crystallised. Then, a much lesser amount of instable crystals are created than by the prior art. Consequently, lesser energy is required for re-melting the remaining instable crystals in the mass as compared with the prior art. But also the quality of the final mass is potentially better, as the amount of in-stable crystals are substantially lesser than by the prior art.

The stream of mass passing through the crystallisation stage is effectively cooled and crystallised. Especially advantageous is, when the conduit is adapted to by-pass more than half of the total amount of mass entering the apparatus.

When more than half of the total mass is by-passed, the remaining stream of mass in the crystallisation stage achieves more than the double time period for passing the crystallisation stage. The crystallisation is then much more effective than by the prior art. Especially the time prolonging has a positive effect on the initialisation and development of crystals in the mass. When the crystallised and the by-passed stream of mass are mixed, the crystals are effectively and homogenously spread out in the final stream of mass in the conditioning and mixing stage. Surprisingly, the amount of crystals are sufficient to achieve a very high quality of the ready tempered mass, which has been proved by taking out numerous tempering curves from samples. Test taken with DSC (Differential Scanning Calorimeter) proves that the samples contain βV-crystals only.

The by-passed stream of mass is kept at a constant temperature immediately before mixing. The temperature is so high, that the by-passed mass is kept free from crystals. The temperature must also be low enough for the crystals in the crystallised stream not to be re-melted during mixing therewith. To find the appropriate temperature for the particular mass is done by simple "trial and error" by withdrawing a sample and making a tempering curve. The temperature is typically between 29 and 34°C, typically 30-33 °C, however is dependent of the particular mass. The temperature of the by-passed amount of mass is then 4-7°C higher than the temperature of the amount of mass passing through the crystallisation stage.

When the primary conduit is adapted to by-pass between 65% and 95% of the total amount of mass entering the apparatus, the savings in energy are especially high. Then 5% to 35% of the total amount of mass is crystallised in the crystallisation stage. Consequently, the available time for crystallisation of the mass passing through the crystallisation stage is severely extended. When 95% of mass is by-passed, the crystallisation time available is twenty times as long as by the prior art. When 90% of mass is by-passed, the crystallisation time available is ten times as long as by the prior art. When 75% of mass is by-passed, the available crystallisation time is extended four times, and when 70% is bypassed the crystallisation time is extended more than three times. The consequence is, that the actual crystallisation process is a high quality process, which provides much better conditions for the crystals to be initiated and to develop in numbers than by the prior art. This is due to the severely extended time period that the chocolate has available in the crystallisation stage.

As a further consequence of the prolonged time period available for crystallisation, the temperature of the crystallisation surfaces can be raised to more than 19 °C, i.e. typically 20 °C. Then, the crystal initiation primarily takes place in the mass instead of at cold crystallisation surfaces as by the prior art. The amount of undesirable crystals, which always concomitant develop at cold surfaces, are then diminishing, and the need for re-melting these crystals in the conditioning and mixing stage is avoided. As a consequence, the resultant quality is higher with the inventive apparatus and the energy is not needed any longer for reheating the total mass 0,5-2,0°C as by the prior art.

The inlet of the primary conduit can be connected to the end of the cooling stage as close as possible to the transition between the cooling stage and the crystallisation stage as possible. This means, that in practice, the inlet could be arranged in either of both stages, when its not practically possible to arrange it just in-between the two stages. However, decisive is, that the by-passed chocolate mass is essentially free from crystals.

The outlet of the primary conduit can be connected to the beginning of the conditioning stage as close as possible to the transition between the crystallisation stage and the conditioning and mixing stage. This means, that in practice the inlet could be arranged in each of both stages, when its not practically possible to arrange it just in-between the two stages. However, decisive is, that the by-passed chocolate mass is essentially free from crystals and that the chocolate mass be crystallised is sufficiently crystallised when the mass is mixed together.

The invention is further described by referring to the drawing, in which
figure 1 discloses a tempering apparatus modified with the kit assembly according to the invention, seen from the side,
figure 2 schematically discloses an example of the inside of the apparatus,
figure 3 schematically discloses another example of the inside of the apparatus,
figure 4 schematically discloses a further example of the inside of the apparatus,
figure 5 schematically discloses an embodiment of the apparatus of figure 1 by which a pump is arranged in the primary conduit,
figure 6 schematically discloses the kit assembly according to the invention in a first embodiment,
figure 7 schematically discloses the arrangement of the embodiment of figure 6 in an existing tempering column,
figure 8 discloses in detail the embodiment of figure 6 and 7,
figure 9 discloses a further embodiment adapted for a tempering column having ring-shaped openings around the shaft for chocolate flow,

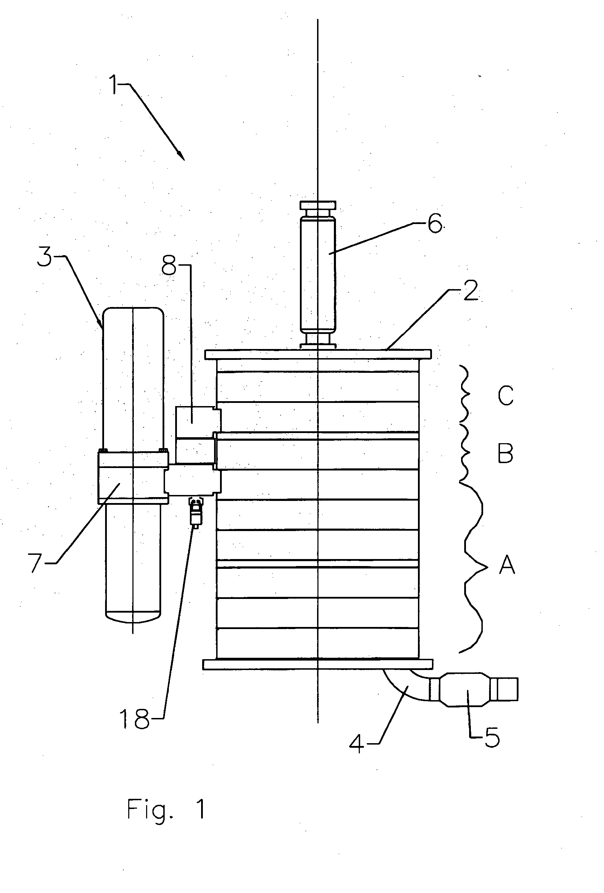

The apparatus 1 disclosed in figure 1 comprises a tempering column 2 for continuous tempering of chocolate mass. Externally on the column 2 is arranged a device 3 for by-passing chocolate outside the column, an inlet 4 and a pump 5 for pumping chocolate mass into the column 2, and an outlet 6 for the ready tempered mass leaving the column. The column 2 is normally arranged in a steel frame or support, which is not disclosed, as it is not part of the invention.

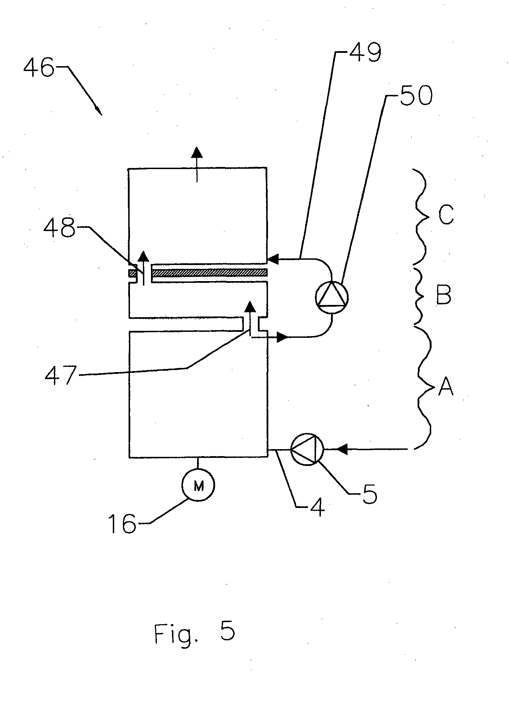

The column 2 comprises a cooling stage A, a crystallisation stage B and a conditioning and mixing stage C. The device 3 comprises a pump 7 as well as a block 8 with internal conduits. In figure 5 is schematically disclosed the tempering column 2 as well as the inner conduits of the block 8 and the pump 7.

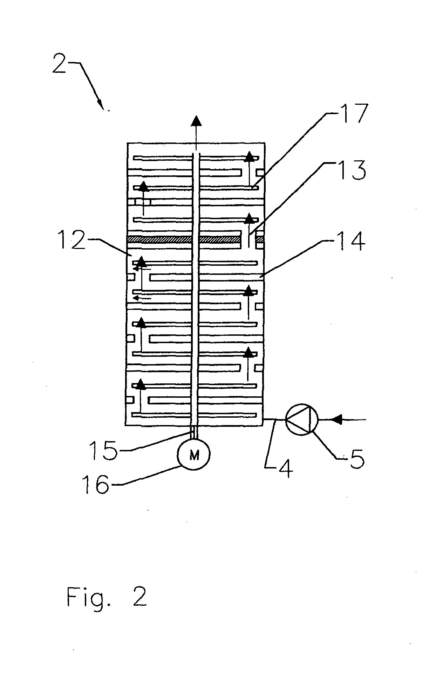

In figure 2 is disclosed, that the apparatus could have disc-shaped chocolate chambers 12 interconnected via chocolate channels 13 and intermediary disc-shaped water chambers 14. A central shaft 15 is connected with stirring tools 17 arranged in the chocolate chambers 12. A motor 16 rotates the shaft 15.

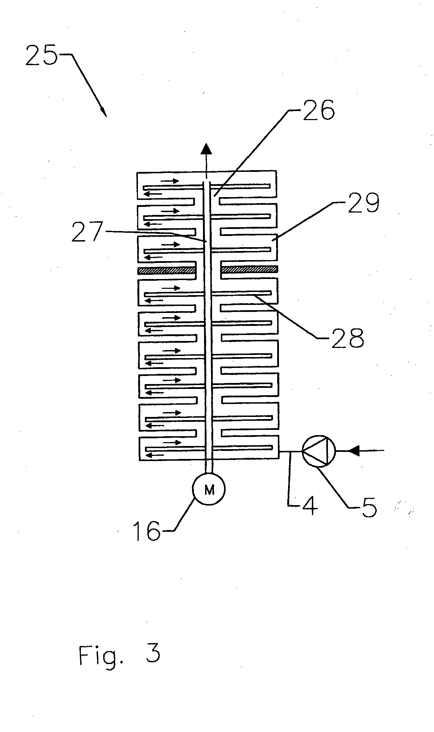

However, the column of apparatus 1 could have several different inner configurations as long as it is able to perform continuous tempering of fat-containing, crystallisable chocolate mass. As disclosed in figure 3 of the column 25, the chocolate channels can also be arranged as ring-shaped openings 26, through which a shaft 27 extends. When the openings 26 are ring-shaped the stirring tools 28 are typically sheave-formed so that the chocolate can pass through at a further ring-shaped opening 29 at the periphery. An external pump 5 provides a pressure for the flow of chocolate through the chambers of the apparatus.

The flow-direction of the chocolate is in figures 2 and 3 disclosed from bottom to top. However it could also be from top to bottom of the columns, or it could even be horizontal as long as the by-passing conduit is arranged according to the inventive idea.

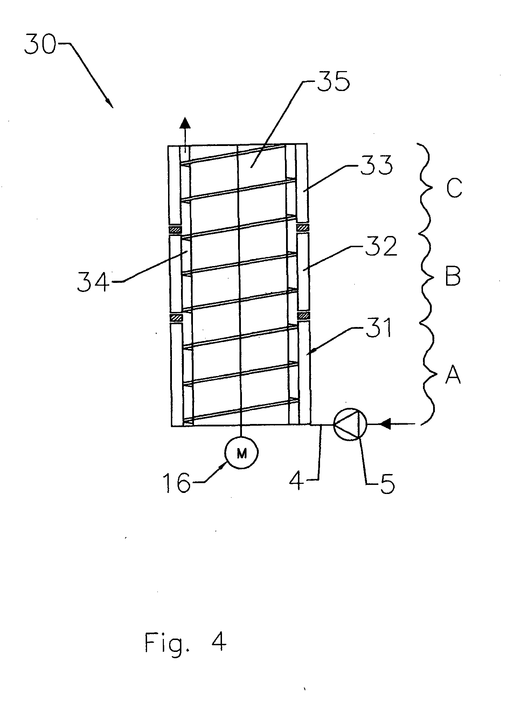

The apparatus could also be of a configuration such as shown in figure 4, by which the column 30 comprises ring-shaped water chambers 31, 32 and 33 at the periphery, surrounding an inner circular channel 34 for the chocolate mass. In the chocolate channel is arranged a rotating screw 35 extending all through the column. The water chamber 31 is then arranged in the cooling stage A, the water chamber 32 is arranged in the crystallisation stage B and the water chamber 33 is arranged in the conditioning and mixing stage C.

The outer periphery of the screw 35 is typically only a few millimetres from the inner surface wall of the surrounding water chambers. The screw is acting as pump means for the transportation of the chocolate through the column 30.

The apparatus could also be a so-called high shear tempering apparatus. The configuration corresponds to that disclosed in figure 4 when the screw is exchanged with a rotating shaft with two or more longitudinally extending knife means. The knives have surfaces, that slides over the inner periphery of the chocolate channel during rotation of the shaft.

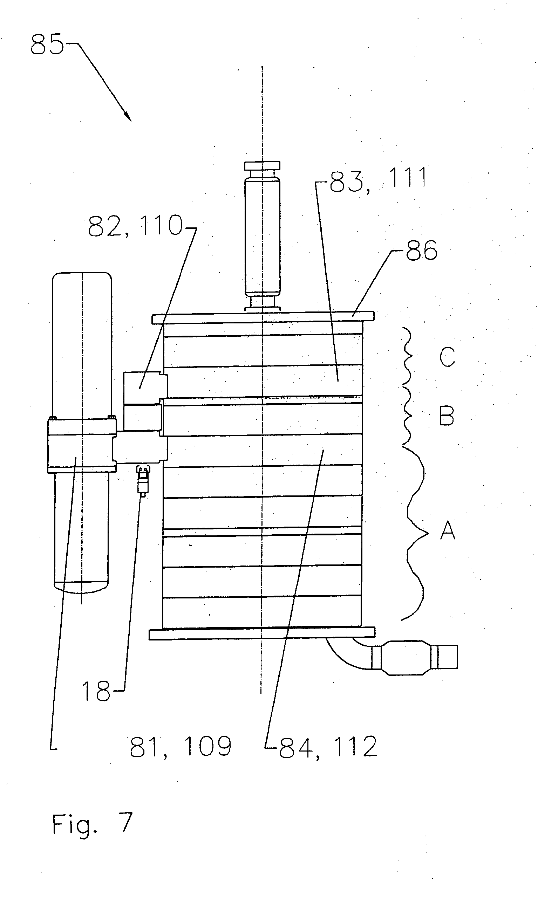

In figure 7 is disclosed the inventive principle mounted on a typical standard column 46 available in the prior art. An opening 47 is arranged for the chocolate flow from the cooling stage A and to the crystallisation stage B, and an opening is arranged for the chocolate flow from the crystallisation stage B and to the mixing stage C. A conduit 49 is arranged, for example in a tube outside the column. A pump 50 is arranged in the conduit for pumping the by-passed amount of chocolate outside the crystallisation stage B.

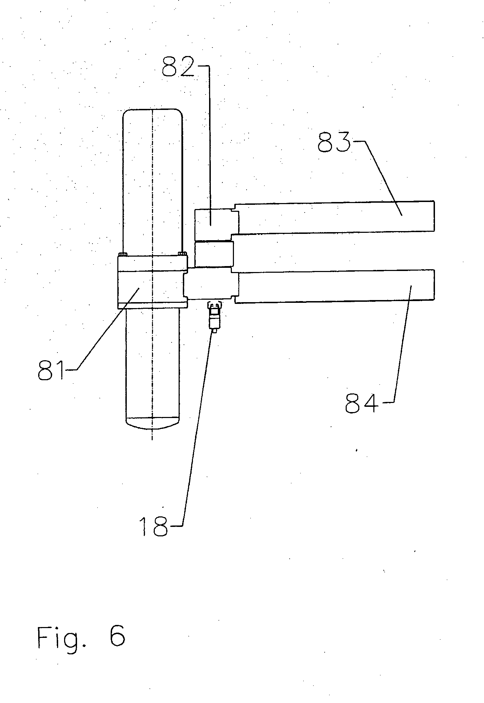

A first embodiment of the kit assembly according to the invention is disclosed in figure 6. It comprises a pump 81, a device part 82 with internal conduits as well as a first disc-shaped element 83 and a second disc-shaped element 84.

In figure 7 is disclosed that the inventive kit assembly of parts is mounted on a existing tempering machine 85 with a tempering column 86. An upper disc-shaped element of the column is substituted with the first disc-shaped element 83 of the kit and a lower disc-shaped element is substituted with the second disc-shaped element 84 of the kit. The main flow direction of the chocolate is from the top to the bottom of the column.

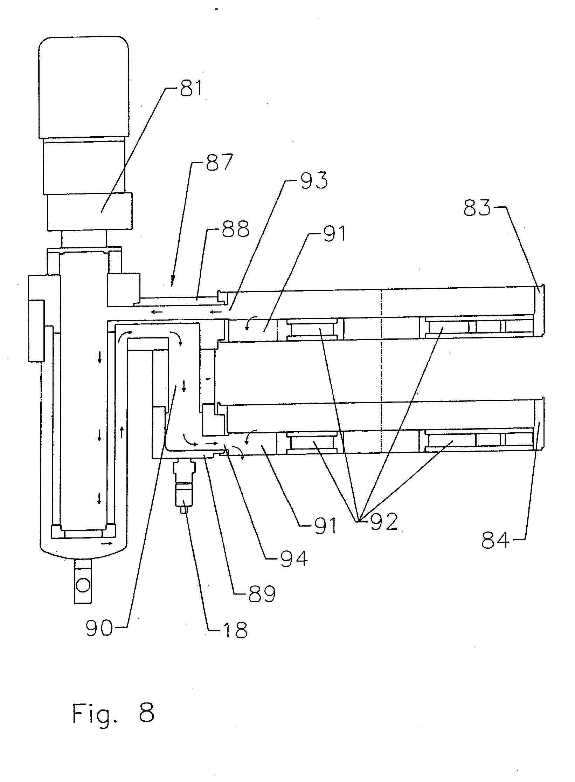

The most simple embodiment of the inventive kit is disclosed in figure 8. The device part 87 of the kit comprises a first end 88 and a second end 89, seen in the flow direction of the chocolate, and a primary conduit 90 for the chocolate mass extending between the two ends. The arrows disclose the flow direction of the chocolate.

The arrangement of the device part 87 and the first element 83 and the second element 84 may be as in figure 15 where it is disclosed that the crystallisation stage B is exactly by-passed by the primary conduit 90. The arrangement may also be in other positions at the column depending on where the crystallisation stage B is arranged in the column for the particular tempering purpose. Decisive is that the crystallisation area is by-passed by the primary conduit of the device part.

The embodiment of the first and second disc-shaped elements 83, 84 are adapted to a tempering column of the type disclosed in figure 2, by which chocolate channels 91 are arranged alternately at the periphery and a closed water chamber 92 is arranged at the bottom of each disc-shaped element.

The disc-shaped elements 83, 84 are typically standard elements from the existing tempering column, which are modified with two extra openings 93, 94 in the periphery. The openings 93, 94 are connected with the first and the second end of the primary channel for by-pass of chocolate. The pump 81 regulates the by-passed amount of chocolate. The function and benefits in relation thereto is also described in relation to figure 5.

In the following are described different further embodiments adapted to a tempering column having a central shaft and ring-shaped openings around the shaft for the flow of chocolate from element to element through the column.

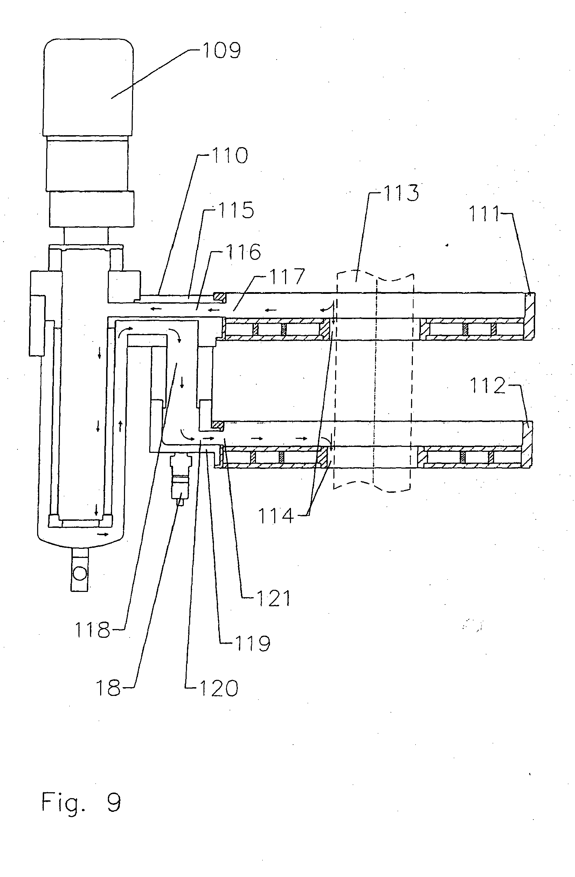

In the embodiment disclosed in figure 9 the pump 109, the device 110, and the first and the second element 111 and 112 can be arranged as disclosed in figure 7. The general flow of chocolate in column may be from the bottom to the top or vice versa. In relation to figure 9 the flow direction is from the top to the bottom.

The shaft 113 is disclosed with punctured line so that the ring-shaped openings 114 for the chocolate flow is visible. The device has a first end 115 connected to the first element 111 so that the inlet 116 of the primary channel 118 is connected to the opening 117 in the first element 111.
The device also has a second end 119 connected to the second element 112 so that the outlet 120 of the primary channel 118 is connected to the opening 121 in the second element 112.
The pump 109 then provides flow of chocolate in the primary channel that by-passes the crystallisation stage B of the tempering column with the advantageous explained above in the description.

Common for the disclosed embodiments of the present invention is, that they may all be implemented in an existing tempering column without altering the height of the column. As existing elements of the column are substituted with the inventive elements the building height of the column is unchanged so that the length of the shaft among others is unchanged. Two existing elements of the column may also be altered so that they are configured according to the elements of the invention.

## Claims

1. Kit assembly of parts adapted for modifying an apparatus (1, 2, 25, 30, 46, 85) for continuous tempering of chocolate mass comprising
a cooling stage (A), a crystallisation stage (B) and a mixing stage (C) arranged as a tempering column (2, 86) of stacked elements each having a water chamber (14, 31, 32, 33, 92) and a chocolate compartment (12, 34), as well as comprising pump means (5) adapted for pumping the chocolate mass through the column from the bottom towards the top of the column or vice versa thereby providing a flow direction for the chocolate, **characterised in,**
**that** the kit comprises a device part (87, 110) having a first end (88, 115) and a second end (89, 119), seen in the flow direction of the chocolate, and a primary conduit (49, 90, 118) for chocolate mass extending between the two ends,
as well as a pump (81, 109) adapted to pump the chocolate through the conduit which kit further comprises a first and a second disc-shaped element (83, 84; 111, 112) adapted to substitute two disc-shaped elements of the tempering column, so that the first end (88, 115) is connected to the first disc-shaped element (83, 111) and the second end (89, 119) is connected to the second disc-shaped element (84, 112), and so that the primary conduit (90, 118) is by-passing the stage (B) for creating crystals.

## Patentansprüche

1. Bausatz von Teilen, die zur Modifizierung einer Vorrichtung (1, 2, 25, 30, 46, 85) zur kontinuierlichen Temperierung von Schokoladenmasse angepasst ist, aufweisend:
eine Kühlungsstufe (A), eine Kristallisationsstufe (B) und eine Mischungsstufe (C), angeordnet als eine Temperierungssäule (2, 86) von übereinander angeordneten Elementen, die jeweils eine Wasserkammer (14, 31, 32, 33, 92) und ein Schokoladenfach (12, 34) aufweisen, sowie eine Pumpeinrichtung (5) für das Pumpen der Schokoladenmasse durch die Säule vom Boden zur Oberseite oder in entgegengesetzter Richtung, wodurch eine Fließrichtung für die Schokolade erzeugt wird, **dadurch gekennzeichnet,**
**dass** der Bausatz ein Geräteteil (87, 110) mit einem ersten Ende (88, 115) und einem zweiten Ende (89, 119), betrachtet in Fließrichtung der Schokolade, sowie eine primäre Leitung (49, 90, 118) für Schokoladenmasse aufweist, die sich zwischen den beiden Enden befindet,
sowie eine Pumpe (81, 109), die geeignet ist zum Pumpen der Schokolade durch die Leitung, deren Satz ferner ein erstes und ein zweites scheibenförmiges Element (83, 84; 111, 112) umfasst, welche dazu geeignet sind, zwei scheibenförmige Elemente der Temperierungssäule zu ersetzen, so dass das erste Ende (88, 115) an das erste scheibenförmige Element (83, 111) angeschlossen ist und das zweite Ende (89, 119) an das zweite scheibenförmige Element (84, 112) angeschlossen ist, und so dass die primäre Leitung (90, 118) an der Stufe (B) zur Erzeugung von Kristallen vorbeigeführt wird.

## Revendications

1. Kit de pièces permettant de modifier un appareil (1, 2, 25, 30, 46, 85) pour le tempérage continu d'une masse de chocolat, qui comprend
un étage de refroidissement (A), un étage de cristallisation (B) et un étage de mélange (C) disposés de sorte à former une colonne de tempérage (2, 86) d'éléments empilés, chacun doté d'une chambre à eau (14, 31, 32, 33, 92) et d'un compartiment à chocolat (12, 34) ainsi que de moyens de pompage (5) adaptés au pompage de la masse de chocolat du bas vers le haut de la colonne et vice-versa imposant ainsi un sens d'écoulement au chocolat, **caractérisé en ce que** le
kit comprenne une partie de dispositif (87, 110) disposant d'une première extrémité (88, 115) et d'une deuxième extrémité (89, 119), vu dans le sens d'écoulement du chocolat, et un conduit primaire (49, 90, 118) pour la masse de chocolat s'étendant entre les deux extrémités,
ainsi que d'une pompe (81, 109) adaptée au pompage du chocolat à travers le conduit, kit comprenant en outre un premier et un deuxième élément de forme ronde (83, 84, 111, 112) adaptés pour remplacer deux éléments de forme ronde de la colonne de température, de sorte que la première extrémité (88, 115) soit connectée au premier élément de forme ronde (83, 111) et que la deuxième extrémité (89, 119) soit connectée au deuxième élément de forme ronde (84, 112) de sorte que le conduit primaire (90, 118) contourne l'étage (B) de formation de cristaux.
